# EUROPEAN PATENT APPLICATION

(11) **EP 4 407 178 A1**
(43) Date of publication of application: **31.07.2024**
(21) Application number: 23382073.7
(22) Date of filing: 30.01.2023
(51) Int. Cl.: F03D 80/30

(54) **INSULATED LIGHTNING TRANSMISSION SYSTEM FOR WIND TURBINE BLADES**

(71) Applicant: Siemens Gamesa Renewable Energy Innovation & Technology S.L., 31621 Sarriguren (Navarra) (ES)
(72) Inventor: Hermoso, Francisco Javier, 31621 Sarriguren (Navarra-España) (ES)
(74) Representative: SGRE-Association

(57) **Abstract**

A wind turbine blade (100) comprising a lightning transmission system for the transmission of lightning current through the wind turbine blade (100). The lightning transmission system comprises one or more lightning receptors (20), a down conductor (1) electrically connected to each of the one or more lightning receptors (20) and extending along an interior of the wind turbine blade (100), and a first conductor element (4) proximate a base portion (6) of the wind turbine blade (100). The first conductor element (4) is electrically connected to the down conductor (1) and extends through a surface of the blade (100) between an interior and exterior of the blade wall (10). The first conductor element (4) comprises an electrically insulating element (45) that configures the first conductor element (4) to be electrically insulated from the blade wall (10). The dielectric strength of the electrically insulating element (45) is greater than the dielectric strength of the blade wall (10) at the location through which the first conductor element (4) extends.

## Description

### Technical field of the invention

The present invention pertains to the field of wind turbine blades, particularly to a blade comprising a lightning transmission system, a wind turbine comprising such blade, a method of manufacturing the same and a method of generating electricity from the same.

### Background of the invention

Wind turbines are exposed to being struck by a lightning, given their height and that they are commonly placed in open areas, where no other element can serve as a lightning receptor. Therefore, it is common practice to install a lightning transmission system (LTS) on wind turbines. As the highest point of a wind turbine is always one of the blades, LTSs are provided on the blades. These systems aim at directing lightning strikes in a controlled path through the wind turbine wherein the controlled path avoids damages to the electronic components of the turbine.

The typical wind turbine LTS comprises at least one receptor on the outside face of the blades that captures the lightning. Then the lightning current is directed towards the base of the blade, using a down conductor usually placed inside of the blade. The receptor extends through the blade to the inside face of the blade to connect to the down conductor. To avoid the lightning current from flowing through the electronic components inside the nacelle of the turbine, the lightning current is once again passed through the blade to the exterior, close to the base of the blade but before reaching the base of the blade where the bearings and other sensitive components are located. On the outside face, another conductor element serves as a transmitter towards one of many possible systems that allow the lightning current to be provided to a grounded element outside of the nacelle. As the nacelle is electrically grounded, the lightning can be effectively transmitted to the ground without affecting the internal components of the wind turbine.

In order to pass the lightning current through the blade, a metal conductor such as a screw is provided that passes through the blade to make the electrical connection between the down conductor, on the inside face of the blade, to the external components of the LTS through or on the outside of the blade. When the base of the blades comprise a conductive or water-absorbent material such as wood or wood fibres, the voltage between the metal conductor and the base may exceed the breakdown voltage and the electric current may jump from the metal conductor to the base of the blade, leading to an undesired path for the lightning and damaging the electronic components of the turbine or any structural components of the blade or turbine. To overcome this problem, turbine blades comprising such an LTS are fully made of non-conductive elements, such as PET, which insulates the base of the blade from the metal conductor and allows the lightning to be transmitted without reaching the wind turbine sensitive elements (engine, bearings, moving elements, inserts to fix the blade to the rotor of the turbine, electronics...) in most cases. However, this limits the types of materials that can be used for the base of the blade, and this does not address the problem for blades already manufactured or in service that contain conductive elements or wood or wood fibre, or that are made of non-conductive materials such as PET where the thickness of the non-conductive material does not provide sufficient dielectric strength. Furthermore, there is still a breakdown voltage through the blade towards its base via the metal conductor.

Moreover, there are a significant proportion of blades of wind turbines which, in their construction, have been partly made of wood or other water absorbent materials, like wood fibre. Although wood is a poor conductor, in a wet environment, moisture is absorbed by the wood and increase its conductivity. Similar increases in conductivity are observed in moist environments with other water absorbent materials. This increase in conductivity increases the likelihood that the lightning current flows through the metal screw and towards the base of the blade, ultimately passing towards the bearings and electronic components of the turbine and damaging or destroying them. Current solutions for these type of blades involve the replacement of wood by plastic materials (such as PET) or any other non-conductive material in new designs, which impose structural limits on the blade or at least restrict the options for materials of the blade.

Although there have been improvements regarding the lightning transmission systems that extend through the surface of the blade to conduct the lightning to the ground, they are focused on the improvement of the transmission of the lightning current from the outer side of the blade to the grounded element (such as the nacelle) by reducing the breakdown voltage i.e. they focus on improvements on the transmitter. However, they do not consider the transmission of the lightning current safely through the blades.

There is therefore a need for providing wind turbine blades comprising an improved lightning transmission system in which the lightning current is transmitted through the blade without affecting the structure of the blade, that can increase the breakdown voltage to the base of the blade, so that the various elements of a wind turbine such as structural elements and electronic elements are not damaged by the lightning.

### Summary of the invention

According to a first aspect of the invention, there is provided a wind turbine blade comprising a lightning transmission system for the transmission of lightning current through the wind turbine blade, the lightning transmission system comprising one or more lightning receptors, a down conductor electrically connected to each of the one or more lightning receptors and extending along an interior of the wind turbine blade, and a first conductor element proximate a base portion of the wind turbine blade, the first conductor element electrically connected to the down conductor and extending through a surface of the blade between an interior and exterior of the blade surface, wherein the first conductor element comprises an electrically insulating element that configures the first conductor element to be electrically insulated from the blade; wherein the dielectric strength of the electrically insulating element is greater than the dielectric strength of the blade at the location through which the first conductor element extends.

According to a second aspect of the invention, there is provided a wind turbine comprising one or more wind turbine blades according to the first aspect.

According to a third aspect of the invention there is provided a method of attaching a lightning transmission system to a wind turbine blade comprising:
a) providing a wind turbine blade;
b) providing a lightning transmission system for the wind turbine blade, the lightning transmission system including a first conductor element comprising an electrically insulating element;
c) mounting the lightning transmission system to the wind turbine blade, including extending the first conductor element through a surface of the blade between and interior and exterior of the blade surface.

According to a fourth aspect of the invention there is provided a method of generating electricity from a wind turbine according to the second aspect.

### Brief description of the drawings

To enable better understanding of the present disclosure, and to show how the same may be carried into effect, reference will now be made, by way of example only, to the accompanying schematic drawings, in which:
- Fig. 1: shows a schematic view of a lightning transmission system in a wind turbine blade according to the prior art.
- Fig. 2A: shows a schematic cross-sectional view of a typical lightning transmission system according to the prior art.
- Fig. 2B: shows a schematic cross-sectional view of lightning transmission system of Fig. 2A showing the possible undesired paths of the lightning current.
- Fig. 3: shows a schematic cross-sectional view of a lightning transmission system according to one or more embodiments.
- Fig. 4A: shows a schematic cross-sectional view of a lightning transmission system according to one or more embodiments.
- Fig. 4B: shows a schematic cross-sectional view of a lightning transmission system according to one or more embodiments.
- Fig. 5: shows a close-up perspective view of the internal side of a blade comprising a lightning transmission system according to one or more embodiments.
- Fig. 6: shows a cross-sectional side view of a blade comprising a lightning transmission system according to one or more embodiments.
- Fig. 7: shows a cross-sectional view of a blade comprising a lightning transmission system according to one or more embodiments.
- Fig. 8: shows a schematic view of a wind turbine according to one or more embodiments.
- Fig. 9: shows a cross-sectional view of a wind turbine according to one or more embodiments.
- Fig. 10: shows a cross-sectional view of a wind turbine according to one or more embodiments.
- Fig. 11: shows a schematic diagram of a method according to one or more embodiments.

### Detailed description

It will be understood that the devices described herein are also suitable for evacuating static charge build-up on the turbine blade, by the same processes described in relation to lightning strikes.

As used herein, the term "creepage distance" may be understood to mean the shortest distance between two conductive elements measured along the surface of an insulator extending between the conductive elements. The term "creepage" may refer to electrical current between two conductive elements along the surface of an insulator.

As used herein, the term "clearance distance" may be understood to mean the shortest distance between two conductive elements through the air.

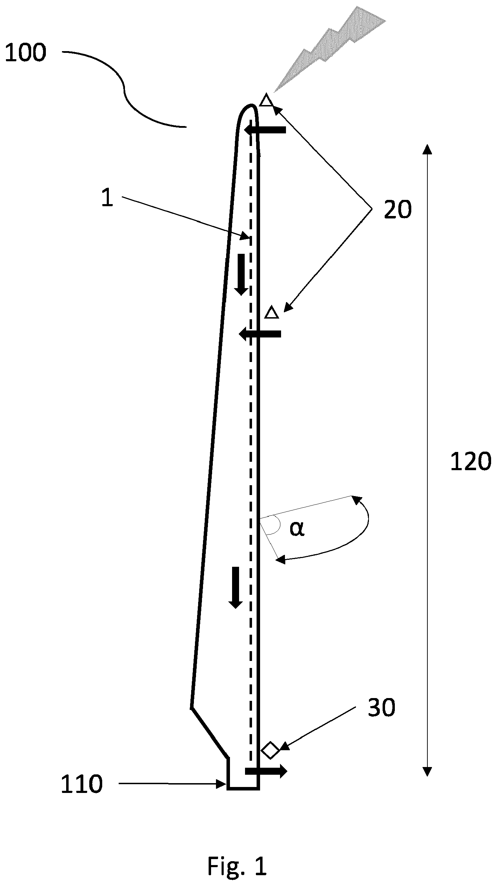

A first aspect of the invention refers to a wind turbine blade comprising a lightning transmission system (LTS) designed for the transmission of lightning current through the wind turbine blade. The LTS comprises one or more lightning receptors, a down conductor electrically connected to each of the one or more lightning receptors and extending along an interior of the wind turbine blade, and a first conductor element proximate a base portion of the wind turbine blade, the first conductor element electrically connected to the down conductor and extending through a wall of the blade between an interior and exterior surface of the blade wall. The first conductor element comprises an electrically insulating element that configures the first conductor element to be insulated from the blade. The dielectric strength of the insulating element is higher than the dielectric strength of the blade at the location through which the first conductor element extends. Fig. 1 shows a schematic view of a lightning transmission system in a wind turbine blade according to the prior art. The wind turbine blade 100 comprises a base 110 that allows it to be affixed to a wind turbine, for example to a rotor of a wind turbine. The base 110 is provided at the proximal end of a proximal portion of the blade 100, opposite to a distal tip of the blade 100 at the distal end of a distal portion of the blade 100.

The breakdown voltage of any undesired path (e.g. path L3) of electrical current from the first conductor element to the base of the blade through the electrically insulating element is preferably equal to or higher than the breakdown voltage for any creepage or clearance path (e.g. path L2) to the base portion of the blade through the interior or exterior surfaces of the blade wall 10.

When the blade is installed on a turbine and the desired path of electrical current to ground also has a breakdown voltage, for example where an air gap is provided between the blade and the nacelle and/or grounding element, the breakdown voltage of any undesired path of electrical current from the first conductor element to the base portion of the blade through the electrically insulating element is preferably higher than the breakdown voltage along the desired path. This provides a preference for electrical current to pass to the ground along the desired path rather than along the undesired path.

As a non-limiting disclosure, the basic components of an LTS are now described to assist in the understanding of the invention. It is noted that although throughout the detailed description of the invention some elements of the LTS are generally referred as receiver and transmitter in the sense followed by descending lightning (from the blade 100 to the ground), the LTS are also designed for ascending lightnings (from the ground to the blade 100). LTSs usually comprise at least one conductive lightning receptor 20 at the distal portion of the blade 100 for receiving a lightning current. The lightning receptor 20 may be a metallic pole, a plate or any other conductive element with high conductivity as known in the art. Several lightning receptors 20 may be provided along the distal portion of the blade 100. Each lightning receptor 20 is electrically connected to the interior of the blade 100 (for example extends through the surface of the blade 100 or is electrically connected to another conductor extending through the surface of the blade 100). The LTS further comprises a down conductor 1, on the inside face of the blade 100, connected to the at least one lightning receptor 20. The down conductor 1 may be a wire, or any other conductive material configured to conduct the lightning along the blade 100 between the distal portion and the proximal portion of the blade 100. The down conductor 1 may be linear such that a linear path for the lightning is provided between the distal and proximal potions, or may take any other shape. Finally, the LTS comprises a lightning transmitter 30 on the outside face of the blade 100 proximal to the base 110 (i.e. at the proximal portion of the blade 100) for transmitting the lightning current from the down conductor on the inside of blade 100 to outside of the blade 100. Typically, the down conductor 1 may connect the one or more lightning receptors 20 with the lightning transmitter 30 and the lightning transmitter 30 is configured to transmit the current to a grounding element of the turbine, for example via the nacelle of the turbine. For making the connection between the down conductor 1 and the at least one lightning receiver 20 and/or the lightning transmitter 30, a metallic bolt 4 (not shown in Fig. 1) crossing the blade between the inside and the outside is provided in the prior art.

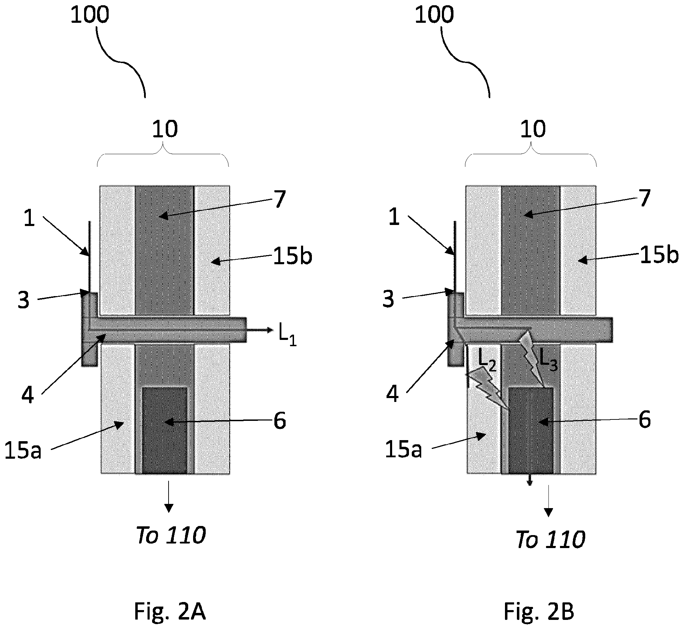

Figs. 2A and 2B show a schematic cross-sectional view of a part of a lightning transmission system extending through the blade according to the prior art and the possible desired and undesired paths of the lightning current, respectively. It can be seen that in some cases the metallic bolt 4 may not conduct the lightning current to the desired place, but it may, due to a breakdown of the insulators of the blade surface or blade interior, deviate the lightning current towards the base 110 of the blade where it can reach one or more sensitive elements, for example an insulated external layer 15a of the blade which may be made of, for example, fiberglass. The blade 100 comprises a wall 10 which may comprise an internal layer 7, which in the prior art may comprise an insulating material such as PET, in order to prevent the undesired paths of lightning current shown in Fig. 2B, and outer layers 15a, 15b covering the internal layer 7. If the internal layer 7 were to comprise a water absorbent material (such as wood) within the blade, the lightning current would be more likely to reach a base portion 6 (for example a metallic base portion) of the base 110 of the blade, especially in moist environments due to the increased conductivity of the water absorbent material. The base portion 6 may be the base 110 of the blade, a metallic blade root insert, or any other piece of the blade electrically connected to an element, either within or outside the blade, for which the lightning current should be routed away from. As shown in Fig. 2A the desired path L1 of the lightning passes through the conductor 4 and to the exterior of the blade where it passes to a grounding element on the turbine and bypasses the base portion 6 and the elements such as bearings and electronic elements. As shown with respect to Fig. 2B, the lightning current may instead take undesired paths L2, L3 in which the lightning current deviates to the base portion 6 through the internal material 7 (path L2) or through an outer layer of the blade such as the outer layers 15a, 15b which may be a fibre material (path L3). The present invention is focused on improved alternatives to such an LTS system to avoid such undesired electrical deviations through the blade surface, independent of the type of material or materials which the blade is constructed from. It is noted that if the electrical connection between the down conductor 1 and metallic bolt 4 is proximal to the interior surface of the wall 10 of blade 100, then there is a higher probability of creepage occurring along the interior surface of wall 10, such as in path L2, which may provide an unwanted path for the lightning current which has a lower breakdown voltage. Therefore, the invention also relates to reducing the probability of such creepage.

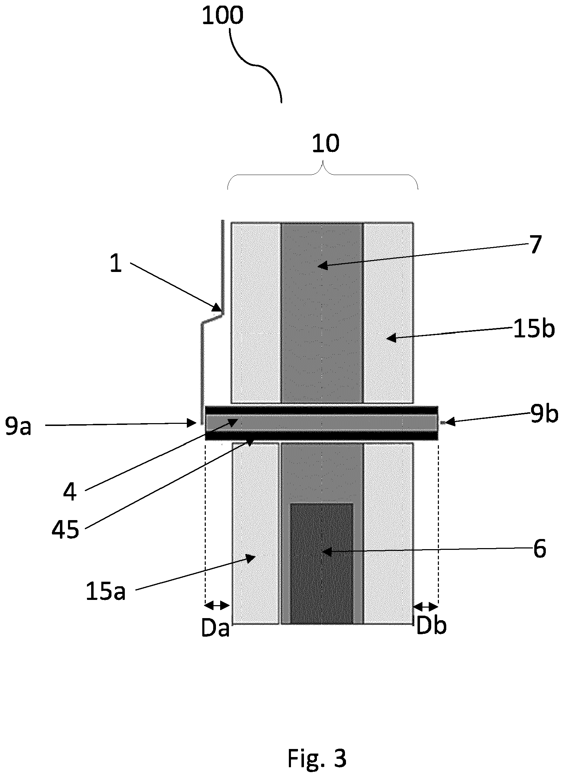

Fig. 3 shows a schematic cross-sectional view of the proximal end of a wind turbine blade 100. The wind turbine blade 100 may comprise all of the features of the blade 100 of Fig. 1. The blade 100 comprises an LTS (partially shown at a proximal portion of the blade 100) for the transmission of lightning current through the wind turbine blade which comprises a first conductor element 4 extending through a surface of the blade 100 between an interior and exterior of the blade surface. The first conductor element 4 comprises an electrically insulating element 45 (for example insulating layer) that configures the first conductor element 4 to be electrically insulated from the blade 100. The blade 100 comprises a base portion 6 electrically connected to electrically sensitive pieces, which may be an element part of base 110. Advantageously, this reduces the likelihood of the lightning current from flowing from the first conductor element 4 to the base portion 6 of the blade 100 (i.e. pathways L2 and L3 shown in Fig. 2B) by increasing the breakdown voltage between the conductor element 4 and the base portion 6.

It is noted that the surface cut-through view of Fig. 3 shows a blade 100 that comprises three layered materials, namely an internal layer 7 which may comprise or consist of an electrically conducting material and/or a water absorbent materials such as wood or wood fibre, or an insulated material such as PET, and two external layers 15a and 15b in the interior and exterior of the blade, respectively, which comprise or consist of fibrous materials. However, in other embodiments the blade 100 may comprise any number of layers comprising or consisting of any materials. Further, the thickness of each layer may be non-uniform along the length of the blade. For example, the thickness of each layer may change along the blade 100. In some embodiments, the layers 15a, 15b, may not be fibrous layers. It is further noted that the first conductor element 4 is electrically connected on the internal side of the blade 100 to a down conductor 1 through an electrical connection 9a which is not illustrated in detail in Fig. 3. This connection may be any suitable direct connection, or it may be any suitable indirect connection via one or more than one connecting elements. Therefore, it may be connected in several ways, for example through a conducting plate, as described in further detail below. The first conductor element 4 may also be connected to an external element of the LTS on the external side of the blade 100 through an external electrical connection 9b, which may be a direct or indirect connection as for electrical connection 9a. The connections 9a, 9b to other elements may be provided at a distance Da, Db, from the surface of the blade, respectively, and the connections 9a, 9b may be provided at different distances Da, Db or one or both may be provided on the surface of the blade. Providing distances Da and/or Db provides an air gap between the connections 9a and/or 9b and the base portion 6, increasing the breakdown voltage at the electrical connections which in turn increases the likelihood that the lightning current takes the desired route. Providing the connections at a distance away from the surface of the blade also increases the creepage distance.

Advantageously, as the insulating element 45 has a higher breakdown voltage than that of the blade at the part of the blade through which the conductor 4 extends, the provision of the electrically insulating element 45 increases the likelihood that the lightning current takes the desired route. As a breakdown voltage between the conductor element 4 and the base portion 6 is provided by the electrically insulating element 45, one or more layers of the blade 100 such as the inner layer 7 may comprise or consist of an electrically conductive material and/or a water absorbent material, without an increased risk of the lightning current deviating towards the base portion 6.

The breakdown voltage of the insulating element 45 may also be greater than the breakdown voltage of the lightning transmission from the external side of the blade to the nacelle or grounding element (when installed on a particular turbine) so that the electrical current preferentially passes along the desired path to ground, rather than to the base portion 6 of the blade. The breakdown voltage of the insulating element 45 may also be equal or greater than the breakdown voltage along a creepage or clearance current through the internal or external surfaces of the blade wall 10 to the base portion 6 so that electrical current from the conductor 4 to the base portion within the blade wall 10 is not more preferential than current through the internal or external surfaces of the blade wall 10.

In preferred embodiments, the increase in the breakdown voltage associated with the insulating element 45 (i.e. the increase in the breakdown voltage for any electrical path passing from conductor 4, through the insulating element 45 and to the base portion 6 through the interior of the blade wall 10) is equal to or greater than the breakdown voltages along the creepage and clearance distance from the electrical connection between down conductor 1 and conducting element 4 to base portion 6 and/or between the conductor 4 and a grounding element of the turbine, for example the nacelle.

The first conductor element 4 may be any type of electrical conductor such as a bolt, wire, flat bar or cable. The first conductor element 4 may electrically connect two conducting elements of the LTS via the electrical connections 9a, 9b at its respective ends. In some embodiments, the electrically insulating element 45 may be comprised along all the first conductor element 4, while in other embodiments the electrically insulating element 45 may be comprised only in some of the sections of the first conductor element 4, such as the section which extends through the blade 100. It is noted that in some embodiments, the electrically insulating element 45 may have different insulating properties in some sections than others. For example, the electrically insulating element 45 may have different thickness in some sections compared to others. Finally, it is noted that whilst in the illustrated embodiment the first conductor element 4 extends perpendicularly to the blade surface, the proposed solution is not limited by the angle the first conductor element 4 makes with respect to the interior and/or exterior surfaces of the blade.

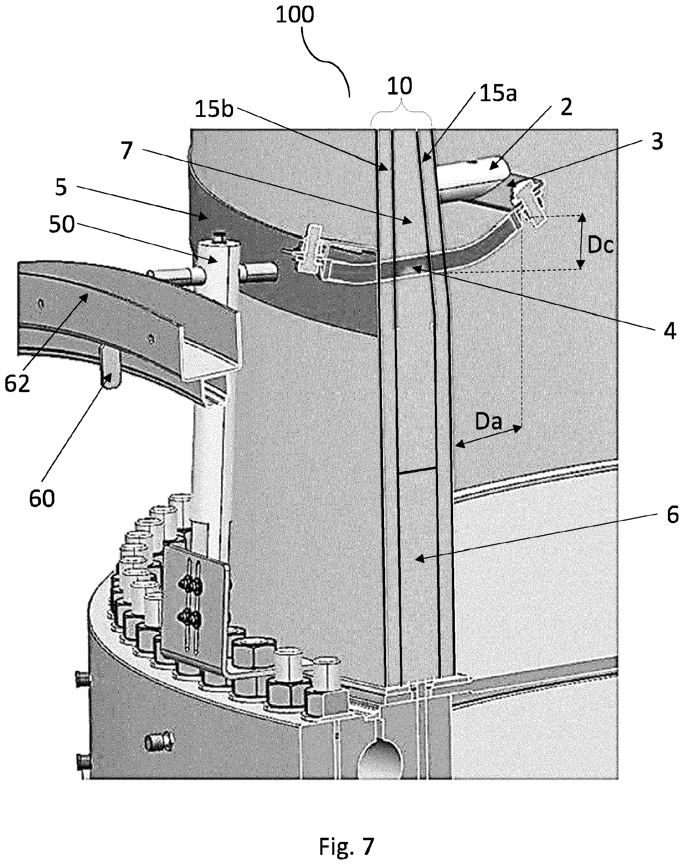

The first conductor element 4 may be electrically insulated from the blade such that the breakdown voltage through the blade 100 to the base portion 6 of the blade 100 is greater than a predetermined threshold voltage. The threshold voltage may be defined by the breakdown voltage of the rest of elements further down the desired electrical pathway L1 of the LTS, where one or more air gaps or one or more other insulating element along the desired electrical pathway L1 is provided. As an example, a lightning strike received by a lightning receptor 20 would pass through the down conductor 1 to the conducting element 4. At the electrical connection, the distance Da provides an increased creepage and clearance distance meaning the breakdown voltage is relatively higher, and the lightning current passes through the conductor 4. The lightning current, when passing through the blade wall 10 via conducting element 4, also is inhibited from flowing directly to the base portion 6 because the insulating element 45 provides a higher breakdown voltage. Finally, at connection 9b, the creepage and clearance distance is again increased by distance Db so that the lightning current is inhibited from following an unwanted path and the current passes to conducting element 5, from which the lightning current can safely reach ground. If an air gap is present between conducting element 5 and ground (such as the embodiment shown in Fig. 7), then the breakdown voltage of the creepage and clearance distances from connections 9a and 9b should be greater than the total breakdown voltage of those air gaps. Similarly, the total breakdown voltage for any electrical path from the conducting element 4 inside the blade to base portion 6 (i.e. crossing the insulating element 45) should be greater than the total breakdown voltage of those air gaps.

The electrically insulating element 45 may comprise any electrically insulating material such as plastic, rubber, nylon, PE and any other suitable materials for insulating electrical cables. For example, the first conductor element 4 may be a bolt covered by an electrically insulating element 45, or a coated cable, wherein the coating serves as the electrically insulating element 45.

For example, for a given electrically insulating element 45 material with a known breakdown voltage value and materials 7, 15a, 15b of the blade 100 composing the blade in the pathway towards the base portion 6 of the blade 100 with other known breakdown voltage value (if insulating), the appropriate thickness of the electrically insulating element 45 may be determined so that the breakdown voltage is above the predetermined threshold value. As the distance covered through the materials 7, 15a, 15b of the blade between the first conductor element 4 and the base portion 6 of the blade 100 along the pathways L2, L3 and any other possible pathways is known, the minimum material of electrically insulating element 45 required so that the breakdown voltage through the LTS along the desired pathway is lower than the breakdown voltage through such electrically insulating element 45 and material in the blade can be calculated as known in the art. This further ensures that the lightning current will flow through the LTS system along the desired pathway, effectively reducing the probability of an electrical deviation through the blade 100 to the base portion 6 of the blade 100 which could damage sensitive elements such as the bearings of the blade 100 or any electrical component electrically connected to the blade. It is noted that different paths through the surface of the blade, including cracks or any other alterations to the materials 7, 15a, 15b may be taken into account when calculating the materials and dimensions to be used.

In embodiments wherein one or more air gaps are provided along the desired path of the lightning current (for example the embodiment described with reference to Fig. 7), it must be ensured that the breakdown voltage for each undesired path is higher than the breakdown voltage for the desired path, so that the electrical current preferably flows along the desired path. For example, the breakdown voltages for the creepage and clearance pathways from connections 9a and 9b along an unwanted lightning path should be higher than the breakdown voltage along the desired path. Similarly, the breakdown voltage of an unwanted path from the conducting element 4 at a point within the blade 100 and through the insulating element 45 must be higher than the breakdown voltage of the air gap(s) from the exterior of the blade to ground along the desired path.

In a preferred embodiment, as shown in Fig. 3, the electrically insulating element 45 is provided at least along the part of the first conductor element 4 crossing the surface of the blade 100. Advantageously, this inhibits the lightning current from flowing from the first conductor element 4 within the blade 100 due to the increased breakdown voltage provided by the insulating element 45.

It is noted that Fig. 3 shows a first conductor element 4 in the form of a cable that can be connected to one or more other conducting elements via one or more electrical connections 9a, 9b in the internal and external side of the blade, respectively, and connections 9a, 9b may be provided at a distance Da, Db, from the surface of the blade, respectively. However, in other embodiments, the first conductor element 4 may be a bolt or any other conductor element that electrically connects the interior and/or exterior surfaces of the blade 100 or conducting elements on the interior and/or exterior surfaces of the blade 100. Also, the distances Da, Db may be the same or different, or one or more of the connections 9a, 9b may be provided proximal the surface of the blade 100, with an intervening insulating layer provided between the one or more connections 9a, 9b and the surface of the blade 100 to provide a sufficient breakdown voltage between the connections 9a and/or 9b and the surface of the blade 100.

It is noted that in some embodiments, the insulating properties of the electrically insulating element 45 may be different along the conductor element 4. For example, the electrically insulating element 45 may have different thickness in some sections compared to others and/or may comprise or consist of different materials having different insulating properties along its length.

In another preferred embodiment, as also shown with respect to Fig. 3, the first conductor element 4 is electrically connected to one or more other conducting elements via one or more electrical connections 9a, 9b, the electrical connections 9a, 9b provided at a distance away from the internal and/or external surface of the blade 100 such that an air gap is provided between the one or more electrical connections 9a, 9b and the surface of the blade 100, thereby increasing the clearance and particularly the creepage distance.

This distance may be configured to provide a greater breakdown voltage between the respective connection and the base portion 6 than the breakdown voltage of the desired electrical pathway (e.g. pathway L1). Advantageously, this inhibits the lightning current from flowing from the electrical connections 9a, 9b to the base portion 6 of the blade by providing a breakdown voltage through the air gap and through the layers of the blade 100 in the undesired pathway (e.g. pathway L2 or L3) towards the base portion 6 of the blade 100, wherein such breakdown voltage is higher than the breakdown voltage along the desired electrical pathway.

It is also noted that Fig. 3 shows a first conductor element 4 in form of a cable that comprises an electrically insulating element 45 in its outermost part. However, in other embodiments, the first conductor element 4 may be a bolt or any other conductor element that extends through the surface of the blade between an interior and exterior of the blade surface.

It will be understood that the air gaps between the electrical connections 9a, 9b and the blade 100 will depend on the breakdown voltage of the desired electrical pathway and the materials and dimensions of the insulating element 45, and the various elements of the blade 100 and the other elements of the lightning transmission system and their configurations. It is noted that the skilled person may take further considerations, such as the expected humidity of the air in the location of the turbine, to determine the size of the air gaps in order to ensure the desired breakdown voltage of the air gaps.

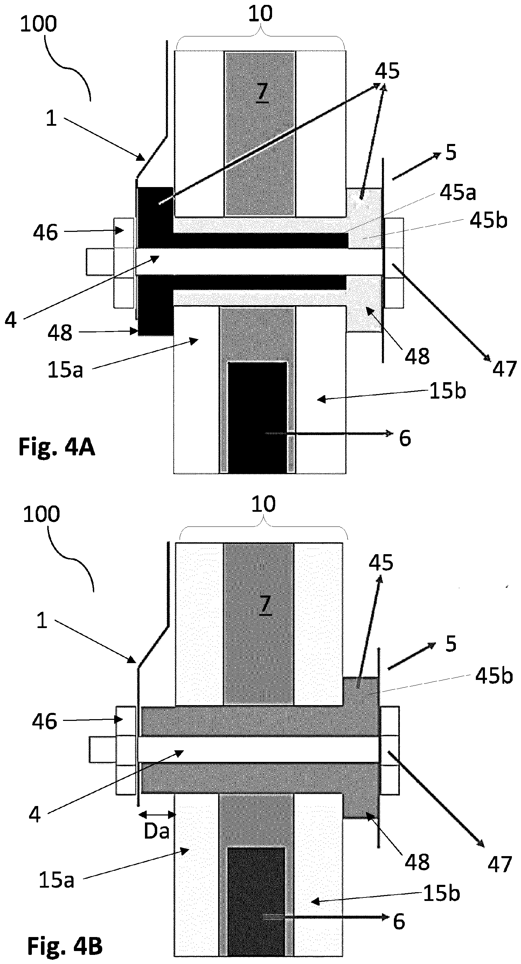

It is noted that the insulating element 45 may take a variety of forms and shapes. For example, in some embodiments the insulating element 45 is an insulating layer as shown in Fig. 3. Fig. 4A shows a schematic cross-section view of the proximal end of wind turbine blade 100 wherein the insulating element 45 comprises a plurality of parts. The wind turbine blade 100 shown in Fig. 4A may comprise all of the features of blade 100 of Fig. 1, and further may be identical to the wind turbine blade 100 described with reference to Fig. 3 except for the insulating element 45. Like reference numerals are used to indicate the same features described with reference to Fig. 3. In some embodiments such as that shown in Fig. 4A, the insulating element 45 comprises a plurality of inserts 45a, 45b, which are each made of an insulating material. The inserts 45a and 45b may be for example bushings. The inserts 45a, 45b, extend through the wall 10 and define a through passage through which the conductor 4 extends. The inserts 45a, 45b completely surround the conductor through the wall 10 so that any electrical current through the blade wall 10 must pass through the insulating element 45. One or both of the inserts 45a, 45b may comprise a flange 48 abutting the interior surface and exterior of the blade wall 10, respectively. The electrical connection between down conductor 1 and conductor 4 may be provided on the opposite side of flange 48 to the interior surface of wall 10. The electrical connection between the conductor 4 and second conductor element 5 may be provided on the opposite side of flange 48 to the exterior surface of wall 10. The provision of such flanges 48 may increase the creepage of the electrical connections as the electrical connection is provided away from the surface of the blade wall 10, and also seal the hole through which the conductor 4 passes through the blade wall 10 thereby preventing the entry of water or humidity into the blade wall 10, which may otherwise degrade the breakdown voltage along undesired paths. Further, the flanges 48 increase the breakdown voltage of the unwanted direct electrical paths from connections 46, 47 to base portion 6, as such direct paths pass through the insulating material of the flanges 48 rather than air.It is noted that any suitable electrical connection between the down conductor 1 and conductor 4, and conductor 4 and second conducting element 5, may be used. For example, as shown in Fig. 4, the electrical connections may be formed by bolts 46, 47. In other embodiments the connections may be made by, for example, welding.

Fig. 4B shows a schematic cross-section view of the proximal end of the wind turbine blade 100 wherein insulating element comprises a single insert 45b. The wind turbine blade 100 shown in Fig. 4A may comprise all of the features of blade 100 of Fig. 1, and further may be identical to the wind turbine blade 100 described with reference to Fig. 3 except for the insulating element 45. In some embodiments such as that shown in Fig. 4B, the insulating element 45 comprises a single insert 45b, which is made of an insulating material. The insert 45b may be for example a bushing. The insert 45b extends through the wall 10 and defines a through passage through which the conductor 4 extends. The insert 45b completely surrounds the conductor 4 through the wall 10 so that any electrical current through the blade wall 10 must pass through the insulating element 45. The insert 45b may comprise a flange 48 abutting the exterior of the blade wall 10. The electrical connection between the conductor 4 and second conductor element 5 may be provided on the opposite side of flange 48 to the exterior surface of wall 10. The provision of such flanges 48 may increase the creepage of the electrical connections as the electrical connection is provided away from the surface of the blade wall 10, as well as preventing the entry of water or humidity as described above. Further, the flange 48 increases the breakdown voltage of the unwanted direct electrical paths from connections 47 to base portion 6, as such direct paths pass through the insulating material of the flange 48 rather than air. It is noted that the insert may have a length which is longer than the thickness of the blade wall 10 so that a distance Da is maintained between the connection 46 and the interior surface of the blade wall 10, thus increasing the creepage distance without the provision of a flange. It is noted that in some embodiments, the insert 45b may be provided the opposite way around so that the flange 48 is provided in the interior side of the blade wall 10 proximate the connection 46.

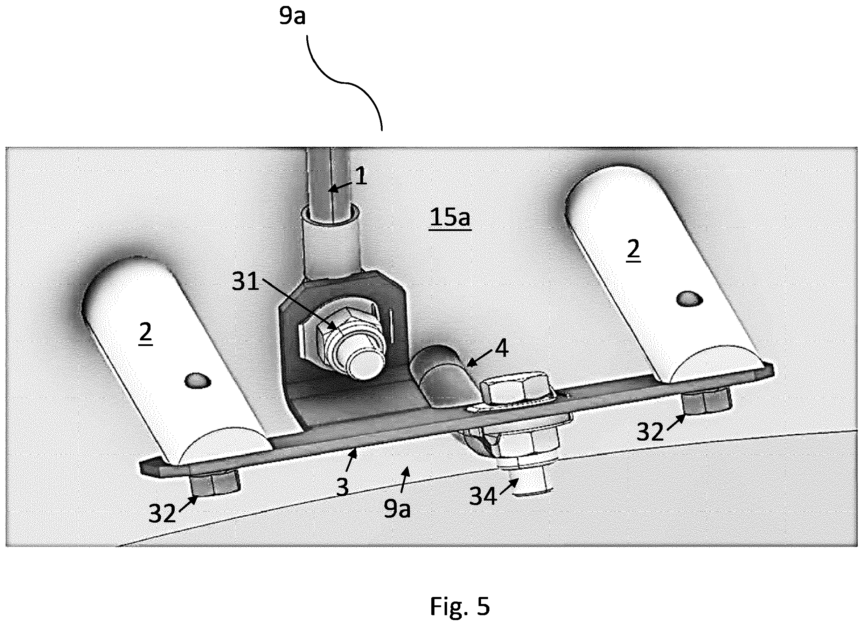

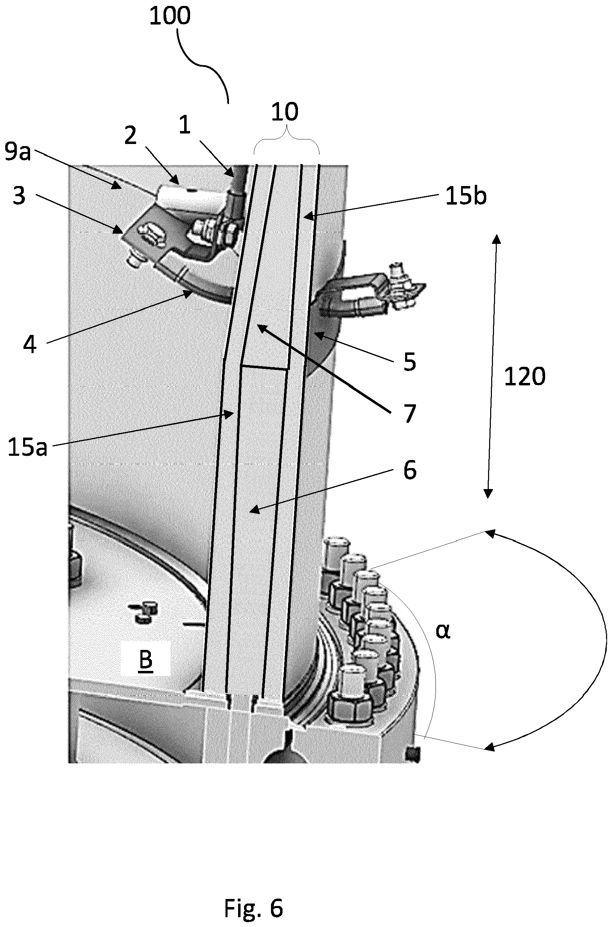

Fig. 5 shows a close-up perspective view of an indirect electrical connection 9a for the blade 100 according to one or more embodiments. In the illustrated embodiment, one the electrical connection 9a comprises a conductive plate 3 mounted to an interior surface of the blade 100 via one or more electrically insulated mounting elements 2. The conductive plate 3 is electrically connected between down conductor 1 and first conductor element 4. The conductive plate 3 has an inwardly-extending lateral extent relative to the interior surface of the blade 100 so that the connection between the plate 3 and the first conductor element 4 is further away from the interior surface of the blade 100 than the connection between the plate 3 and the down conductor 1, ensuring a larger creepage and clearance distance. It is noted that the connection between the down conductor 1 and the plate 3 at bolt 31 may also be located away from the interior surface of the blade 100, as can be seen in Fig. 6. Additionally an insulating layer may be provided on the interior surface of the blade behind the plate 3 to increase the breakdown voltage from bolt 31 to the interior surface of the blade 100, if required. In other embodiments, the plate 3 may be U-shaped or any other suitable shape such that bolt 31 is provided as the same distance from the interior surface of the blade 100 as the bolt 34. It is noted that in some embodiments the conductive plate 3 may be a strip or other electrically conducting element connecting the down conductor 1 and the first conductor element 4. The electrical connection 9a may further be mounted to the interior surface 15a of the blade 100 via one or more insulated mounting elements 2, which provide further structural support to the electrical connection 9a whilst maintaining the preferred electrical pathway by inhibiting electrical current passing via the one or more mounting elements 2 due to their electrical insulation. The mounting elements may be made of any electrically insulating material such as PET, nylon, or any suitable electrically insulating polymer. In some embodiments the mounting elements 2 may not be provided. It will be appreciated that the electrical connection 9b may be provided using a conductive plate having the above-described features in relation to connection 9a, but mounted to the exterior surface of the blade wall 10.

Advantageously, having the electrical connection 9a comprising a conductive plate 3 allows the down conductor 1 and conducting element 4 to be connected independently of their relative positions. In other words, the plate 3 provides an intermediate electrical connection which provides further flexibility in the relative positioning of the conducting element 4 and the down conductor 1. The plate 3 also provides an increased clearance and creepage distance for the electrical connection to the surface of the blade and the internal parts of the blade such as base portion 6. The same conclusions can be made for the electrical connection 9b between conducting element 4 and conductor element 5 when it is provided a distance away from the exterior surface of the blade, for example as shown in Fig. 6.

It is noted that although the electrical connection 9a of Fig. 5 comprises a conductive plate 3 with a determined shape, in other embodiments the conductive plate 3 may take different shapes. It is also noted that in the illustrated embodiment the conductive plate 3 is electrically connected to the down conductor 1 and to the first conductor element 4 through bolts 31, 34. However, different types of electrical connector may be used in other embodiments, as known by the skilled person such as welding connections, lugs or any other type of electrical connection. Similarly, the conductive plate 3 is connected to the electrically insulated mounting elements 2 through bolts 32, although as in the case of bolts 31 and 34, other connection mechanisms as known in the art may be used.

The electrical connections 9a, 9b may comprise or consist of any suitable metal such as copper, aluminium, steel, or alloys thereof.

Furthermore, it is noted that the electrical connection 9a of Fig. 5 comprises two electrically insulated mounting elements 2 extending between the interior layer 15a of the blade 100, which in the illustrated embodiment are straight and perpendicular to the internal surface of the blade 100. It is noted however, that in some embodiments, there are provided just one electrically insulated mounting element 2 or more than two electrically insulated mounting elements 2. Moreover, the electrically insulated mounting elements 2 may take different shapes to those illustrated, such as an angled or curved shape and their cross-sectional shape may not be circular but oval, squared or any suitable cross-sectional shape. The one or more insulated mounting elements 2 may be mounted in a different angle with respect to the internal surface of the blade 100 or may be even attached to other surfaces of the blade. The one or more electrically insulated mounting elements 2 may be bolted or glued to the blade surface or to any other interior part of the blade. When bolted it may be bolted through the entire blade, just to the surface or to one of the layers (such as 15a) comprising the blade or lug embedded into the blade.

The one or more electrically insulated mounting elements 2 may comprise any insulating material such as plastic, rubber or nylon. It is noted that the one or more electrically insulated mounting elements 2 may be fully comprised by a single insulating material or may comprise any other material either insulating or not, as long as the electrically insulated mounting elements 2 still provide a complete electrical insulation between the conductor plate 3 and the blade 100. For example, it may be comprised of a structural material that provides structural rigidity to the insulated mounting element 2, surrounded by an insulating material like rubber. The mounting elements 2 may comprise one or more embedded bushings and/or interior screw threads to allow a screwed connection of the plate 3 to the mounting elements 2 and/or a screwed connection between the mounting elements 2 and the blade 100.

In another preferred embodiment, the blade 100 comprises an electrically conductive element and/or a water absorbent material (for example internal layer 7), and the first conductor element 4 crosses the electrically conductive element and/or water absorbent material of the blade 100. As shown for example in Fig, 3 the internal layer 7 comprises an electrically conductive element and/or a water absorbent material within the blade between the fibre layers 15a and 15b, that extends along the blade at least at the portion where the first conductor element 4 extends through the surface of the blade 100, and the electrically conductive element and/or the water absorbent material is connected to or in contact with the base portion 6 of the blade 100. As the conductor element 4 comprises insulating element 45, the preferred electrical pathway L1 is still maintained as the preferred path because the increased breakdown voltage between the conductor element 4 and the base portion 6 is maintained by the insulating element 45.

It is noted that in some other embodiments, the blade 100 may alternatively or additionally comprise the electrically conductive and/or water absorbent material in another element of the blade such as the other layers 15a, 15b or any other elements of the blade which the conductor element 4 crosses or any element between the conductor element 4 and the base of the blade 100, or it may even comprise the whole blade. For example, the electrically conductive and/or water absorbent material may be comprised in the internal surface of the blade. It is further noted that the electrically conductive and/or water absorbent material may not be electrically connected to the base portion 6 of the blade 100, but be situated between the first conductor element 4 and the base portion 6, thus decreasing the breakdown voltage (which is countered by the increased breakdown voltage provided by the insulating element 45). Moreover, although in Fig. 5 the electrically conductive element and/or water absorbent material is comprised within the blade surrounded by other layers 15a, 15b, it is further noted that the electrically conductive element and/or water absorbent material may be comprised in other positions of the blade, or the blade may comprise only some or none of the other layers 15a, 15b.

Advantageously, the first conductor element 4, being surrounded by the insulating element 45, further prevents the lighting current from deviating through the electrically conductive element and/or water absorbent material of the blade 100 towards the base portion 6 of the blade 100. This allows for a wider variety of materials to be used for the blade 100 without affecting the preferred electrical pathways for the LTS of the blade.

In a further preferred embodiment, the blade 100 comprises wood or wood fibre which is a water absorbent material. Although wood is not electrically conductive under normal dry conditions, when the wood or wood fibre layer gets wet or humid it becomes conductive. The breakdown voltage of the blade 100 decreases, as the wood or wood fibre allows for an easier pathway for the lightning current to flow in the presence of water. The base portion 6 of the blade is in turn electrically connected to sensitive elements of the turbine such as the bearings and electronics for converting the motion of the blades into electrical power. As such, lightning current along an unwanted path could cause damage to components of the blade or turbine such as the blade inserts and electronic components. Accordingly, the insulating element 45 and the air gaps Da, Db, provide a breakdown voltage for the unwanted paths even if the blade comprises wood or wood fibre.

Fig. 6 shows a cross-sectional side view of a blade 100 comprising an LTS assembled to a turbine base B according to another preferred embodiment. It will be appreciated that the transmission system external to the blade and the nacelle are omitted. The blade 100 may be any of the blades disclosed herein according to the invention. As previously described, the blade 100 comprises a wall 10, which may comprise any number of layers such as two layers 15a, 15b forming the internal and external surfaces of the blade 100, respectively, and an internal layer 7 which in some embodiments may comprise an electrically conductive element and/or water absorbent material as previously disclosed. The blade comprises a base portion 6, which may be partially embedded between layers 15a and 15b and in contact with the internal layer 7. The LTS system of the blade 100 comprises a first conductor element 4 connected in the internal side of the blade to the down conductor 1 through electrical connection 9a which may comprise a conductor plate 3, the conductor plate 3 is mounted to the blade 100 through one or more electrically insulated mounting elements 2. The electrical connection 9a may be according to any of the embodiments described with reference to Fig. 5. According to the preferred embodiment, the first conductor element 4 is electrically connected to a second conductor element 5 on the external side of the blade, the second conductor element 5 forming an electrically conductive surface from which the current can be transmitted to an external grounding element (not shown). The second conducting element 5 may be considered equivalent to the lightning transmitter 30 of Fig. 1.

Whilst in Fig. 6 the first conductor element 4 is shown as a cable having a bending radius, it is noted that in other embodiments the first conductor may be a straight cable or other conducting element such as a flat bar or plate.

It is noted that Fig. 6 illustrates a blade 100 comprising two layers 15a, 15b and internal layer 7. It will be appreciated that the blade may comprise more or less than 3 layers, or a singular unitary body Also, the first conductor element 4 may be provided with any suitable angle with respect to the surfaces of wall 10. The first conductor element 4 may be connected with the down conductor 1 and with the second conductor element 5 at a distance from the internal and external surface of wall 10 of blade 100, respectively. In other embodiments the electrical connections 9a and/or 9b may be provided at or on the internal and/or external surfaces of the wall 10 of blade 100.

According to one or more embodiments, the second conductor element 5 forming the electrically conductive surface from which the lightning current can be transmitted between the first conductor element 4 and an external grounding element may be mounted to the blade through an electrically insulated mounting element (not shown) such as the electrically insulated mounting elements 2 previously disclosed. The electrically insulated elements may comprise any insulating material such as plastic, rubber or nylon. The second conductor element 5 may be mounted to the blade 100 by an adhesive such as silicon adhesive or any other suitable adhesive. It is noted that the electrically insulated mounting element for the second conductor element 5 may be fully comprised by a single insulating material or may comprise any other material either insulating or not, as long as the electrically insulating elements still provide a complete electrical insulation between the second conductor element 5 and the surface of the blade.

According to a more preferred embodiment, as shown with respect to Fig. 6, the second conductor element 5 comprises a conductive part which extends around the blade 100 in a direction perpendicular to a longitudinal axis 120 of the blade 100. It will be appreciated that elements of the lightning transmission system external to the blade 100 are omitted from Fig. 6, as well as the nacelle. The blade 100 may be rotatable about the longitudinal axis 120 in order to change the attack angle α of the blade 100 such that the operation of the turbine is optimized in different conditions such as different wind speeds and directions. As the attack angle α of the blade 100 is varied, if the second conductor element 5 does not have an extent in the direction perpendicular to the longitudinal axis 120, the size of the air gap between the second conductor element 5 and a ground element on the nacelle of the turbine may vary. Advantageously, providing a conductive part of the conductor element 5 extending perpendicular to longitudinal axis 120 reduces the maximum air gap with the ground element as the attack angle α is varied, meaning that the preferred electrical pathway is maintained. In other words, as the angle of attack α changes, the relative position of the second conductor element 5 with the ground element may change. Therefore, extending the second conductor element 5 in a direction perpendicular to a longitudinal axis 120 of the blade 100, i.e., in the direction of rotation of the attack angle α, helps the LTS system to maintain a conductive part of the second conductor element 5 proximal to the grounding element.

Even more preferably, the second conductor element 5 has an angular extent in a plane perpendicular to the longitudinal axis 120 equal to or greater than a range of angles of attack α over which the blade 100 is configured to operate. In preferred embodiments, the second conductor element 5 has an angular extent of 90° over the surface of the blade 100. Advantageously, this further configures the electrically conductive surface formed by the second conductor element 5 to be proximal to the grounding element at any attack angle α the blade may be set at.

It is noted that the perpendicular direction the second conductor element 5 extends around the blade 100 is not exclusive, and the second conductor element 5 may additionally extend also in another direction not perpendicular to the longitudinal axis 120 of the blade 100. For example, in Fig. 6 the second conductor element 5 extends also along the blade surface in the direction parallel to the longitudinal axis α of the blade. Moreover, it is noted that the second conductor element 5 may take several shapes around the blade, and may not conform to the blade surface, or they may be provided at a distance from the blade surface.

According to an even more preferred embodiment, as shown in Fig. 6, the second conductor element 5 is mounted to the external surface of the blade 100 and conforms to the surface. It is noted that in some embodiments, only part the second conductor element 5 may conform to the surface while some other part may not conform to the surface of the blade 100.

According to a second aspect of the invention, there is provided a wind turbine comprising one or more wind turbine blades according to any of the blades of the first aspect of the invention.

It is noted that the wind turbine may comprise two or more blades according to the first aspect of the invention. For example, all the blades may be blades according to the first aspect of the invention or some blades may be blades according to the first aspect of the invention whilst others may not comprise the LTS according to the invention. It is also noted that when the turbine comprises more than one blade according to the first aspect of the invention, each of the blades according to the first aspect of the invention may be according to different embodiments of the first aspect of the invention.

Fig. 7 shows a cross-sectional view of a blade 100 comprising an LTS as part of a turbine according to one or more embodiments. For simplicity, some elements of the turbine such as the nacelle to which a grounding element 60 is mounted are omitted from Fig. 7. The blade 100 may be any of the blades 100 according to the invention disclosed herein and in particular with reference to Figs. 3, 4A, 4B, 5 and 6. The wind turbine comprises a nacelle (not shown), and the nacelle comprises a grounding element 60 for receiving lightning from the LTS of the one or more wind turbine blades. The grounding element 60 is configured to serve as the receiver of the current from and to the second conductor element 5 of the LTS in the external surface of the blade 100.

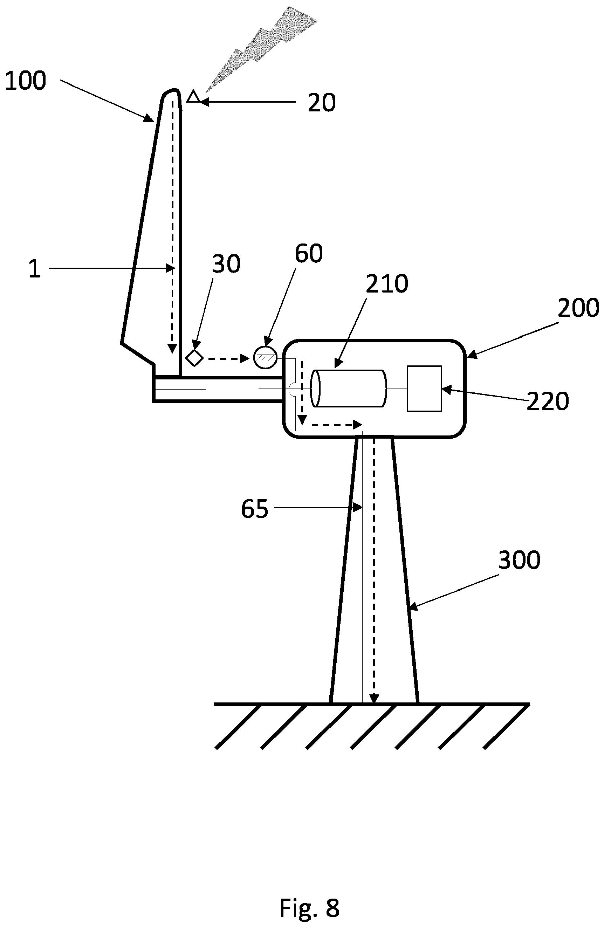

The grounding element 60 may be any suitable grounding element as known in the art and may be connected to the ground in several different ways. Fig. 8 shows a schematic view of a wind turbine according to one or more embodiments. The wind turbine comprises a blade 100, which may be any of the blades according to the invention disclosed herein (other blades have been omitted for simplicity), connected to a nacelle 200. The nacelle 200 comprises a generator 210 and a set of electronics 220 electrically connected to the base of the blade 100. The blade 100 according to one or more embodiments of the first aspect of the invention, comprises an LTS, the LTS comprising a lightning receptor configured to receive a lighting striking the blade; a down conductor 1 and a lightning transmitter 30 for transmitting the lightning current out from the blade 100. The wind turbine nacelle 20 comprises a grounding element 60 configured to be a receptor for the lightning from the grounding element 60. The grounding element is grounded by an electrical pathway 65 in the form of a cable insulated from the internals of the nacelle 200, i.e., electrically insulated from both the generator 210 and the set of electronics 220, and/or by the tower of the wind turbine. It can be seen that in Fig. 8 the electrical pathway 65 is designed to flow through the nacelle 200 and the tower 300 of the wind turbine. However, in other embodiments, the electrical pathway 65 may be designed on the outside of the nacelle 200 and/or the tower 300, and it may comprise other elements different form cables such as plates or it may be comprised within the nacelle surface, or the nacelle 200 and the tower 300 itself may comprise or consist of a conductive material such that they form the electrical pathway 65. Also, the electrical pathway may comprise more than one element, and may not interact with the nacelle 200 nor/or the tower 300, for example, through a cable directly grounded to the ground.

In a further preferred embodiment, as shown with respect to Fig. 7, the grounding element 60 of the nacelle comprises a third conductor element 62 extending in a direction about the axis of rotation of the wind turbine. In Fig. 7 it can be seen that the third conductor element 62 extends in the direction about the axis of rotation of the wind turbine, defining an arc of a circumference around such axis of rotation. Advantageously, this allows the grounding element 60 to be able to receive the lightning current from the LTS of the one or more wind turbine blades when the blade 100 is rotated around the axis of rotation of the wind turbine.

It is noted that the embodiment illustrated in Fig. 7 comprises a conductive bridge 50 between the second conductor element 5 and the grounding element 60 for reducing the air gap between the second conductor element 5 and the grounding element 60. It will be appreciated that in other embodiments, the lightning transmission system of the turbine does not include the conductive bridge 50 and includes other elements for transmitting the electrical current from the blade (and namely conducting element 5) to ground. The turbine may comprise any transmission system for transmitting the electrical current from the base of the blade to ground as known in the art. The transmission system may include any contact system, including a brush connected to ground and configured to contact the blade, or any other non-contact system, or hybrid contact/non-contact systems as known in the art.

The third conductor element 62 may extend in a direction about the axis of rotation of the wind turbine for a particular angle. In some embodiments, it may extend 360°, therefore defining a complete circumference, or it may extend just by 180°, defining half a circumference, for example the upper half-circumference of the turbine. As lightning generally strikes the blade in the highest position a 180° arc for the third conductor element 62 on the upper half of the nacelle still provides a functional grounding element 60.

In another further preferred embodiment, as shown in Fig. 7, the grounding element 60 is

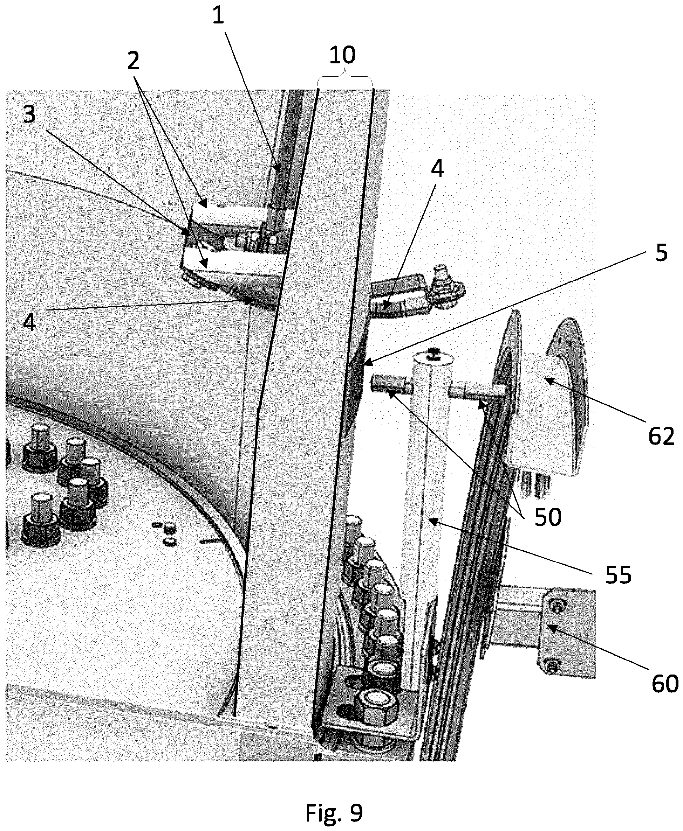

Fig. 9 shows a cross-sectional view of a wind turbine with a blade 100 comprising an LTS. The blade 100 may be any of the blades according to the invention disclosed herein. According to another further preferred embodiment, the wind turbine further comprises one or more conductive bridges 50 between the one or more blades and a nacelle (not shown) configured to reduce the air gap between the LTS of the one or more blades 100 and a grounding element 60 mounted to the nacelle. Advantageously, this reduces the air gap between the blade and the nacelle and therefore the breakdown voltage of the pathway. The conductor bridge 50 is attached through an insulated support 55. It is noted that the one or more conductive bridges 50 may be mounted to the rotating part of the turbine (i.e. fixed relative to the blades 100).

It is also noted that other mechanisms for transmitting lightning from the blades to the turbine may be provided. For example, in some embodiments a brush contact may be provided between the grounding element 60 and the external conductor element 5 such that an electrical connection is maintained between the blade and the nacelle during rotation.

It is noted that Fig. 9 discloses a blade 100, comprising a wall having a unitary body. However, it will be understood the wall may comprise any of the elements disclosed with reference to the other figures such as layers 15a, 15b and 7. It is noted that the conductor bridge 50 in Fig. 9 takes a "T"- shape and is attached to the base of the blade, however, it is noted that many other shapes may be envisaged for the conductor bridge 50.

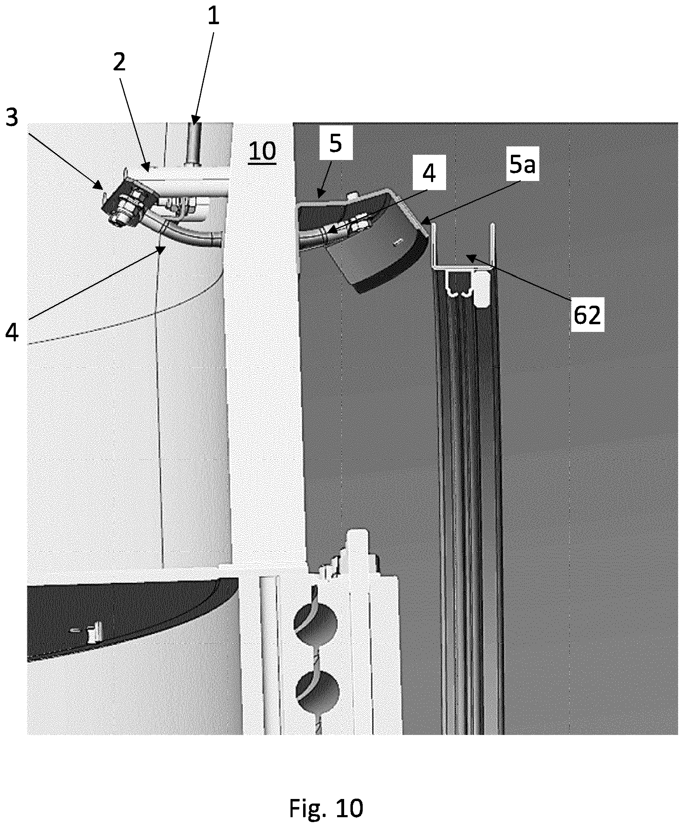

Fig. 10 shows a cross-sectional view of a wind turbine with a blade 100 comprising an LTS. The blade 100 may be any of the blades according to the invention disclosed herein. However, instead of the conductive bridge 50 disclosed with reference to Fig. 9, the second conductive element 5 comprises a curved shelf comprising a curved face 5a. The curved face 5a may be flexible or adjustable. The curved face is configured to very closely approach, or even contact, the third conductor element 62 on the nacelle, so that there is little or no air gap between the nacelle and the lightning transmission system of the blade, and therefore little or no breakdown voltage associated with the desired path to ground. The curved face 5a may have a curved shape configured to contact the third conductor element regardless of the angle of attack of the blade 100.

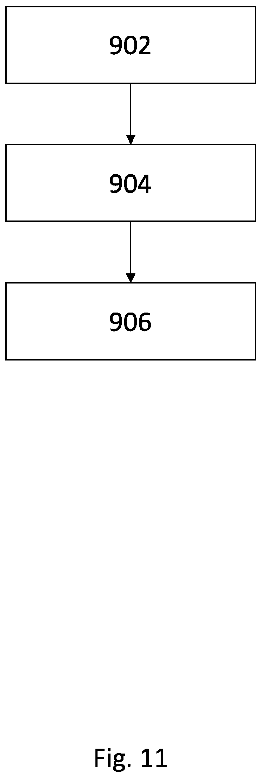

A third aspect of the invention refers to a method of attaching a lightning transmission system to a wind turbine blade. Fig. 11 shows a method 900 of attaching a lightning transmission system to a wind turbine blade according to one or more embodiments. The method 900 comprises the following steps.

Firstly, the method step 902 comprises providing a wind turbine blade. The wind turbine blade may be any kind of wind turbine as known in the art, independently of their construction material, size, or functionality design. It may therefore be for an onshore wind turbine, or an offshore wind turbine. The wind turbine blade may be manufactured in step 902 or may be part of an existing wind turbine comprising at least one wind turbine blade having a surface defining the interior and exterior of the blade.

Secondly, the method step 904 comprises providing an insulated lightning transmission system (LTS) for the wind turbine blade, the LTS including a first conductor element comprising an electrically insulating layer, the step including extending the first conductor element through the wind turbine blade. The LTS may additionally comprise several elements such as a lightning receptor, a lightning transmitter and a down conductor configured to connect the lightning receptor with the lightning transmitter. The first conductor element is configured to provide the connection between the down conductor and the lightning transmitter. It is noted several alternative options of these elements as known in the state of the art may be provided. The first conductor element may be any conducting element such as a bolt or a cable comprising an electrically insulating layer. The LTS system may be any of the LTS systems described herein according to the invention.

Finally, the method step 906 comprises mounting the LTS to the wind turbine blade, including extending the first conductor element through a wall of the blade between and interior and exterior of the blade wall. If the blade is already part of a wind turbine, this step may be performed for a plurality of, or all of the blades of the turbine. This step may be performed by, for example, drilling a hole through the surface of the blade, the hole allowing for the extension of the first conductor element through the surface of the blade between and interior and exterior of the blade surface. Alternatively, a hole already provided in the blade, or from a previous first conductor element may be used. The different elements of the LTS, such as the lightning receptor, the lightning transmitter and the down conductor may be connected as known in the art.

It is noted that the method may be applied to wind turbine blades already in service by attaching or replacing a lightning transmission system to one or more wind turbine blades as outlined above. Alternatively, the method may be applied to wind turbine blades during their manufacture process (i.e. before the wind turbine is assembled).

A fourth aspect of the invention refers to a method of generating electricity from a wind turbine according to any of the wind turbines of the second aspect of the invention. Advantageously, the wind turbine preferably transmits lightning through the blade and to the grounding element without reaching sensitive elements of the wind turbine such as bearings or electronics more effectively. This reduces the probability of lightning deviating from the preferred pathway designed form the LTS, which could damage or deteriorate any of the sensitive elements of the wind turbine.

All of the above are fully within the scope of the present disclosure, and are considered to form the basis for alternative embodiments in which one or more combinations of the above described features are applied, without limitation to the specific combination disclosed above.

In light of this, there will be many alternatives which implement the teaching of the present disclosure. It is expected that one skilled in the art will be able to modify and adapt the above disclosure to suit its own circumstances and requirements within the scope of the present disclosure, while retaining some or all technical effects of the same, either disclosed or derivable from the above, in light of his common general knowledge in this art. All such equivalents, modifications or adaptations fall within the scope of the present disclosure.

## Claims

1. A wind turbine blade comprising a lightning transmission system for the transmission of lightning current through the wind turbine blade, the lightning transmission system comprising one or more lightning receptors, a down conductor electrically connected to each of the one or more lightning receptors and extending along an interior of the wind turbine blade, and a first conductor element proximate a base portion of the wind turbine blade, the first conductor element electrically connected to the down conductor and extending through a wall of the blade between an interior and exterior surface of the blade wall, wherein the first conductor element comprises an electrically insulating element that configures the first conductor element to be electrically insulated from the blade; wherein the dielectric strength of the electrically insulating element is greater than the dielectric strength of the blade at the location through which the first conductor element extends.

2. The wind turbine blade according to claim 1, wherein the electrically insulating element is provided at least along the part of the first conductor element crossing the surface of the blade.

3. The wind turbine blade according to claims 1 or 2, wherein the first conductor element is electrically connected to one or more other conducting elements via one or more electrical connections, the electrical connections provided at a distance away from the internal and/or external surface of the blade such that an air gap is provided between the one or more electrical connections and the surface of the blade.

4. The wind turbine blade according to claim 3, wherein at least one of the electrical connections comprises a conductive plate mounted to an interior surface of the blade via one or more electrically insulated mounting elements; and/or wherein at least one of the electrical connections comprises a conductive plate mounted to an exterior surface of the blade via one or more electrically insulated mounting elements.

5. The wind turbine blade according to any of the previous claims, wherein the blade comprises an electrically conductive material and/or a water absorbent material and the first conductor element crosses the electrically conductive material and/or the water absorbent material.

6. The wind turbine blade according to any of the previous claims, wherein the first conductor element is electrically connected to a second conductor element on the external side of the blade, the second conductor element forming an electrically conductive surface from which the current is configured to be transmitted between the blade and an external grounding element.

7. The wind turbine blade according to claim 6, wherein the second conductor element extends around the blade in a direction perpendicular to a longitudinal axis of the blade, preferably wherein the second conductor element has an angular extent in a plane perpendicular to the longitudinal axis equal to or greater than a range of angles of attack over which the blade is configured to operate.

8. The wind turbine blade according to claim 7, wherein the second conductor element is mounted to the external surface of the blade and conforms to the surface.

9. A wind turbine comprising one or more wind turbine blades according to any of claims 1 to 8.

10. The wind turbine according to claim 9, wherein the wind turbine comprises a nacelle, wherein the nacelle comprises a ground element for receiving lightning from the lightning transmission system of the one or more wind turbine blades.

11. The wind turbine according to claim 10, wherein the grounding element of the nacelle comprises a third conductor element extending in a direction about the axis of rotation of the wind turbine.

12. The wind turbine according to any of the claims 10 or 11, wherein the wind turbine further comprises one or more conductive bridges between the one or more blades and the nacelle configured to reduce an air gap between the lightning transmission system of the one or more blades and the grounding element of the nacelle.

13. The wind turbine according to any of claims 10 to 12, wherein for the one or more blades, the breakdown voltage of the path of electrical current from the lightning transmission system to the grounding element is lower than the breakdown voltage of any path of electrical current from the first conducting element to the base portion of the blade.

14. A method of attaching a lightning transmission system to a wind turbine blade comprising:
d) providing a wind turbine blade;
e) providing a lightning transmission system for the wind turbine blade, the lightning transmission system including a first conductor element comprising an electrically insulating element;
f) mounting the lightning transmission system to the wind turbine blade, including extending the first conductor element through a wall of the blade between an interior and exterior surface of the blade wall.

15. A method of generating electricity from a wind turbine according to any of claims 9 to 13.
